# EUROPEAN PATENT SPECIFICATION

(11) **EP 0 489 929 B1**
(45) Date of publication and mention of the grant of the patent: **13.12.1995**
(21) Application number: 91912067.5
(22) Date of filing: 02.07.1991
(51) Int. Cl.: H04N 7/167

(54) **TRANSMITTING DEVICE FOR CATV**
SENDEVORRICHTUNG FÜR EINE GEMEINSCHAFTSANTENNENANLAGE
DISPOSITIF DE TRANSMISSION POUR LA TELEVISION PAR ANTENNE COLLECTIVE

(30) Priority: 02.07.1990 JP 174902/90
(43) Date of publication of application: 17.06.1992
(73) Proprietor: MATSUSHITA ELECTRIC INDUSTRIAL CO., LTD., Kadoma-shi, Osaka-fu, 571 (JP)
(72) Inventor: SUGIMOTO, Akihisa, Hiratsuka-shi, Kanagawa 254 (JP)
(74) Representative: Lips, Hendrik Jan George, Ir.
(86) International application number: JP9100890
(87) International publication number: WO9200653

(56) References cited:
- EP-A- 0 098 901
- WO-A-85/05523
- GB-A- 2 161 679
- JP-A-59 152 787
- JP-A-61 256 882
- JP-A-63 263 886
- JOURNAL OF THE INSTITUTION OF ELECTRONIC AND RADIO ENGINEERS vol. 55, no. 12, December 1985, LONDON, GB pages 377 - 385 S.M. EDWARDSON 'A conditional access system for direct broadcasting by satellite'

## Description

### TECHNICAL FIELD

The present invention relates to a CATV transmission installation which receives television programs by means of a communications satellite and supplies them to general homes.

### BACKGROUND ART

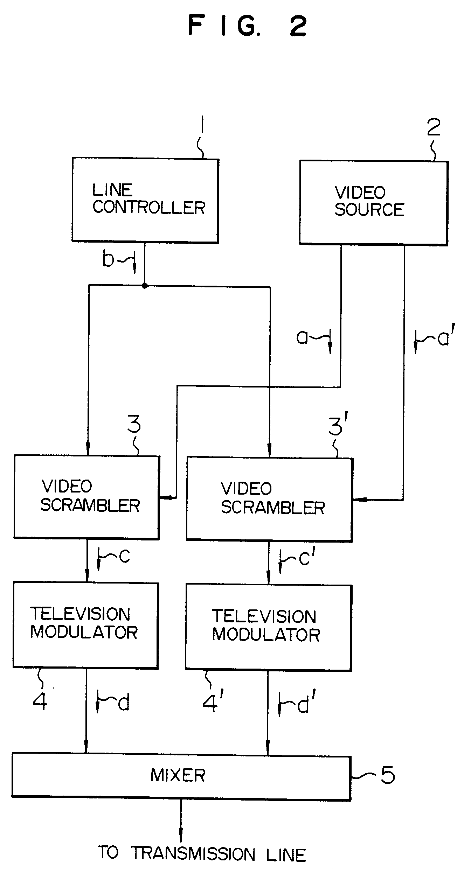

An example of prior art CATV transmission installations will be explained with use of Fig. 2.

A program transmission equipment called a heat end in the CATV transmission installation comprises a line controller 1 for controlling the scrambling operation of a pay program, video scramblers 3 and 3′ for performing scrambling operation over video signals a and a′ received from a video source 2 of a pay program on the basis of a control signal b received from the line controller 1 respectively, television modulators 4 and 4′ for converting scrambled video signals c and c′ received from the video scramblers 3 and 3′ into RF television signals d and d′ respectively, and a mixer 5 for mixing the television signals d and d′ received from the respective channels and for sending a mixed signal to a transmission line. When scrambling operation is carried out with respect to a plurality of channels in this manner, the control signal b is sent from the line controller 1 to the video scramblers 3 and 3′ at the same time.

These years, pay programs have been supplied to CATV by means of communications satellite and even a television signal to be transmitted through the communications satellite have been able to be subjected to an independent scrambling operation. For this reason, a receiver for the communications satellite and a descrambler for restoring the received signal into an original signal have been installed in the head end. Further, companies for supplying satellite pay programs have conducted the operation of CATV pay programs mainly in Europe. In order to improve the efficiency and rationalization of such program operation, there has been recently employed a method for setting the scrambling format in the scrambler of the communications satellite to be equal to the conventional scrambling format of the scrambler (video scramblers 3 and 3′) of the CATV system.

However, since a plurality of programs are supplied from a plurality of pay-program supply companies to the CATV system, it is indispensable to install the scrambler in the head end. Thus, there is a problem that, when it is desired to change the scrambling format of the satellite system, it is also required to change the scrambling format of the video scramblers 3 and 3′ for all pay programs being used in the CATV. At the same time, it is necessary to change a TAG signal indicative of the charging level of the video scramblers 3 and 3′ installed in the head end. Presently, there has been locally employed a method for controlling the video scramblers 3 and 3′ installed in each CATV through telephone line, but this method has been difficult and inefficient in realizing the simultaneous change of the aforementioned scrambling format and TAG signal because the number of CATV head ends, for example, in the overall Europe reaches several thousand.

### DISCLOSURE OF INVENTION

It is an object of the present invention to provide a CATV transmission installation which solves the aforementioned problem and which allows simultaneous change of both the scrambling format of a scrambler in a CATV system and a TAG signal.

In order to solve the above problem, a CATV transmission installation in accordance with the present invention comprises a satellite receiver for receiving and demodulating a scrambled television signal of a specific channel from a communications satellite, a data decoder for decoding a scramble control data from an output video signal of the satellite receiver, and a single or a plurality of scramblers for scrambling a single or a plurality of video signals received for a different television channel on the basis of the scramble control data decoded by the data decoder.

With such an arrangement as mentioned above, the scrambler for a channel different from the communications satellite channel scrambles the video signal with use of the scramble control data for the communications satellite television signal decoded by the data decoder, whereby the scrambling format of the scrambler can be made equal to that of the communications satellite television signal.

### BRIEF DESCRIPTION OF DRAWINGS

Fig. 1 is an arrangement of a heat end in a CATV transmission installation in accordance with an embodiment of the present invention; and
Fig. 2 is an arrangement of a heat end in a prior art CATV transmission installation.

### BEST MODE FOR CARRYING OUT THE INVENTION

An embodiment of the present invention will be explained with reference to the accompanying drawings.

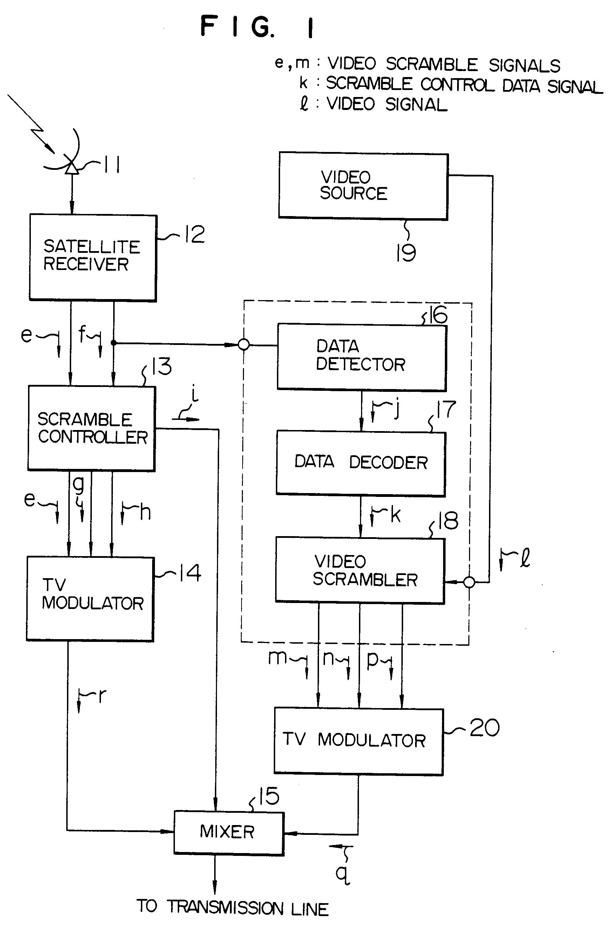

Referring to Fig. 1, there is shown an arrangement of a heat end in a CATV transmission installation in accordance with an embodiment of the present invention.

When scrambling operation is applied to a satellite system, a scramble control data is simultaneously transmitted in order to control a descrambler installed in a subscriber terminal or a head end. There are two cases where this scramble control data is multiplexed on a video signal and on a subcarrier for transmission. In the case of the CATV transmission installation of Fig. 1, the subcarrier is used for the scramble control data.

In the drawing, reference numeral 12 denotes a satellite receiver which receives through a satellite antenna 11 a television signal of a satellite channel having the same format as the scrambling format of a CATV system, demodulates the television signal, and outputs a scramble video signal e and a subcarrier signal f to a scramble controller 13. When it is desired to send the scramble video signal e as an output of the satellite receiver 12 to the CATV system without any change, the scramble video signal e is sent from the satellite receiver 12 through the scramble controller 13 to a television modulator 14, where the scramble video signal e is converted into a television signal r of a specific CATV channel which in turn is sent through a mixer 15 to a transmission line. At this time, the scramble controller 13 outputs to the TV modulator 14 a clamp signal g necessary for television modulation and a key signal h necessary for the descrambling of a subscriber terminal, and also subjects a data signal i for control of the subscriber terminal to an RF modulation and then outputs the signal i to the mixer 15.

Reference numeral 16 denotes a data detector which is provided to detect a scramble control data for a channel different from the satellite channel. More specifically, the data detector 16 extracts part of the subcarrier signal f received from the satellite receiver 12 and outputs a signal j to a data decoder 17. The data detector 16 may be incorporated in the scramble controller 13 in some cases. The data decoder 17 decodes the baseband data signal j received from the data detector 16, detects a data necessary for the scramble control therefrom to detect the change of a scrambling format and a TAG signal, and controls a video scrambler 18 on the basis of the detected data. The data decoder 17, which has a specific address for detection of the TAG signal, has a function of judging whether or not the control is for its own channel. The video scrambler 18 scrambles a video signal ℓ received from a video source 19 according to a scramble control data signal k received from the data decoder 17 and sends a video scramble signal m, a clamp signal n and a key signal p to a television modulator 20. The television modulator 20 in turn, converts the received signals m, n and p into a television signal q for the specific CATV channel and sends the signal q via the mixer 15 to the transmission line.

With such an arrangement as mentioned above, the data detector 16 and the data decoder 17 enable the simultaneous modification of both the scrambling format of the satellite channel and the scrambling format of the video scrambler 18 and also enable the modification control of the TAG signal. In this way, the scrambling formats of the video scrambles 18 installed in the respective CATVs can be collectively modified.

### INDUSTRIAL APPLICABILITY

As has been disclosed in the foregoing, in accordance with the present invention, when a scrambler for a channel different from a communications satellite channel scrambles a video signal with use of a scramble control data for a communications satellite television signal decoded by a data decoder, the scrambling format of the scrambler can be modified at the same time as the modification of the scrambling format of the communications satellite television signal to be equal to each other.

## Claims

1. A CATV transmission installation comprising a satellite receiver for receiving and demodulating a scrambled television signal of a specific channel from a communications satellite, a data decoder for decoding a scramble control data from an output video signal of the satellite receiver, and a single or a plurality of scramblers for scrambling a single or a plurality of video signals received for a different television channel on the basis of the scramble control data decoded by the data decoder.

## Patentansprüche

1. CATV-Übertragungsanordnung mit einem Satellitenempfänger zum Empfangen und Demodulieren eines von einem Kommunikationssatelliten kommenden verschlüsselten Fernsehsignals eines bestimmten Kanals, einem Datendecoder zum Decodieren eines verschlüsselten Steuersignals eines Ausgangsvideosignals des Satellitenempfängers und einem einzelnen oder mehreren Verschlüsselungseinrichtungen zum Verschlüsseln eines einzelnen oder von mehreren Videosignalen, die für einen verschiedenen Fernsehsignal basierend auf den verschlüsselten Steuerdaten, decodiert durch den Datendecoder, erhalten wurden.

## Revendications

1. Installation de transmission pour la télévision par antenne collective, comprenant un récepteur de satellite destiné à recevoir et à démoduler un signal de télévision brouillé d'un canal déterminé en provenance d'un satellite de communication, un décodeur de données pour décoder les données de contrôle de brouillage provenant d'un signal vidéo émis par le récepteur de satellite et un seul ou plusieurs brouilleur(s) pour brouiller un seul ou plusieurs signal(signaux) vidéo provenant d'un canal de télévision différent, sur base des données de contrôle de brouillage décodées par le décodeur de données.
